(19) **Europäisches Patentamt**

**European Patent Office**

**Office européen des brevets**

(11) **EP 1 324 479 A1**

(12) **EUROPEAN PATENT APPLICATION**

(43) Date of publication:
**02.07.2003 Bulletin 2003/27**

(51) Int Cl.⁷: **H02M 3/158**

(21) Application number: **01830830.4**

(22) Date of filing: **28.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **STMicroelectronics S.r.l.**<br>**20041 Agrate Brianza (Milano) (IT)** | (72) Inventor: **Criscione, Marcello**<br>**87100 Ragusa (IT)**<br><br>(74) Representative: **Ferreccio, Rinaldo**<br>**c/o Botti & Ferrari S.r.l.,**<br>**Via Locatelli, 5**<br>**20124 Milano (IT)** |

(54) **"Bipolar low voltage fast synchronous rectifier for mixed step-up/down architectures."**

(57) The invention relates to a synchronous rectifier circuit (30) working as a high-efficiency DC/DC converter for mixed step-up/step-down applications, the circuit having a loop regulating structure and comprising a circuit portion (15) adapted to drive a power switch (Q7), and a comparator (25) adapted to enable the driving portion (15).

Advantageously, the comparator has a wide passband for forcing prompt triggering of the regulation loop of the rectifier.

**FIG. 3**

EP 1 324 479 A1

**Description**

Field of Application

The present invention relates to a synchronous rectifier circuit that is capable of working as a high-efficiency DC/DC converter for mixed step-up and/or step-down applications.

The invention broadly relates to a circuit for use in battery-powered apparatus, e.g. pagers, cellular phones, and portable computers, or in other words, in long-duration portable electronic apparatus where a battery voltage must be transformed into a higher regulated voltage in a highly efficient manner.

More particularly, the invention relates to a circuit incorporating a regulating loop structure and comprising:

an input terminal receiving a voltage signal, a second input terminal node connected to an external inductor, and an output terminal;

a power switch connected between said terminal node and said output terminal to convert on its output a voltage presented at one end of said inductor;

a driver circuit for driving the power switch, and a comparator sensing the potential difference between the output and input terminals and to produce an enable signal for the driver circuit.

Prior Art

The architecture of a step-up/step-down rectifier-converter circuit usually includes switching elements, having very low internal resistance (Ron) and high switching speed, which may be active elements such as mosfets or bipolar transistors working as loop-back diodes.

This type of converters are known as synchronous rectifier converters, the expression implying the necessity of a control logic that is associated to the converter for precisely synchronize the switch opening and closing and avoid a simultaneous activation (the cross-conduction phenomenon) that would result in high power dissipation and, hence, unacceptably low performance.

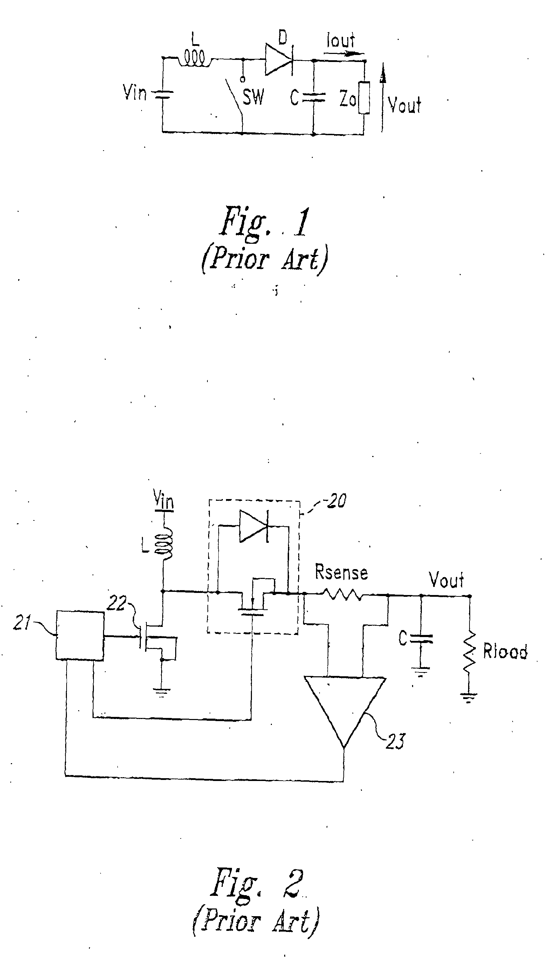

A simplified architecture for a conventional DC/DC converter in a step-up configuration is schematically shown in Figure 1.

The loop-back element employed consists of a diode D, whereby energy is transferred from the magnetic field of the inductor L to an output capacitor C and a load $Z_O$. As the layout shown reveals on closer examination, there is no way of obtaining a regulated output voltage that be lower than the supply voltage minus the voltage drop ($V_{BEON}$) across the conducting diode.

Clearly, this restrains the use of that basic circuit in a mixed set-up/step-down configuration. Furthermore, due to a voltage drop occurring across the diode upon turning on, the diode D represents a loss factor and drastically lowers the conversion efficiency.

For example, assuming an average current value Iout=1A for the load to be transferred, with Vout=5V and through a diode having $V_{BEON}$=0.7V, then the average power loss would be PD=700mW. This amount of lost power would be additional to that dissipated through the switch in operation, being on the order of 500mW, against an amount of power Pout=Vout*Iout=5W actually delivered to the load. This would provide an efficiency value (Pout/Pin) close to $\eta$=80%, quite unacceptable for long-duration battery-powered applications.

A traditional approach to improved performance in terms of conversion efficiency is provided by the use of a Schottky or barrier diode, which is characterized by a short recovery time and low values $V_{BEON} \cong 0.35 - 0.5V$.

With reference to the above-instanced case, an efficiency $\eta$=83-85% can be achieved by that scheme. Despite the improved efficiency, however, a limitation to this layout comes from the impossibility to have the output voltage regulated when set at values below Vin-$V_{BEON}$.

The efficiency may be further improved, according to the prior art, by substituting active switching elements (pass-transistors or mosfets) to the loop-back diode, as the exemplary circuit of Figure 2 shows.

The use of an active switching element instead of a loop-back element (diode D) effectively reduces the voltage drop during the transfer of power to the load, down to $V_{CESAT} \cong 0.2\text{-}0.5V$ where a bipolar transistor is used, and to $V_{DSON} \cong 0.2\text{-}0.3V$ where a power mosfet is used.

A synchronous rectifier circuit is schematised in Figure 2 as applied to a step-up layout, in which a P-channel power-MOS transistor 20 is used as switching element. Additionally to a control logic 21 arranged to control the order and working time of the switches 20 and 22, there are provided a sensing element ($R_{SENSE}$) for sensing the current to the load, and a comparator block 23 for controlling the power transfer and issuing an appropriate signal to the control logic.

The signal from the comparator block 23 is used to prevent the power-MOS 20 from also transferring power to the input from the load, thereby reversing the current direction and defeating all efforts to improve efficiency.

Controlling the above phenomenon is particularly important in a discontinuous mode of operation, in which the step-up layout is more frequently used.

Moreover, the resistor $R_{SENSE}$ provided introduces an additional power loss equal to $Iout*R_{SENSE}$. This may be unacceptable in certain cases, e.g. in high-current applications.

The reason for electing to use a P-channel power-MOS is the low internal resistance $R_{DSON}$ that a power-PMOS exhibits and its suitability to be voltage rather than current driven.

Unfortunately, as shown in Figure 2, the body connection of a power-PMOS involves the presence of a large size diode (occupying the same area as the whole power-PMOS well) between the input and output terminals. At the start-up step, with the output voltage still close to zero, this large size diode allows the passage of a current whose top value can far exceed the peak value attained during the steady-state operation (inrush current). This has destructive effects on the passive components (inductor L) unless the latter are provided oversized so that they can abide the initial transient phase.

Consequently, increased size of the inductor L and printed circuit tracks, as well as higher cost and heavy power supply stressing, are incurred. The last-mentioned factor greatly restricts duration in battery-powered apparatus. Reducing the top value of the inrush current by providing a resistor limiter would preserve the integrity of the components, but also bring about unacceptably high power losses.

Finally, the presence of the parasitic diode once again forbids regulating the output voltage when the latter is less than $Vin-V_{BE}$ (step-down configuration).

A further prior approach, effective to partly obviate the aforementioned drawbacks, is described in US Patent No. 6,091,232 relating to a DC/DC converter that is intended for converting a DC input voltage (Vin) into a DC output voltage (Vout) using a PNP bipolar power transistor as a synchronous rectifier switch. The bipolar transistor is turned on by means of simple control circuitry arranged to sense, in a prompt and automatic manner, the potential difference across the switch.

This prior approach does allow power to be transferred to the output from the input in a one-way fashion, while enabling the saturation level of the power transistor to be controlled automatically and its base current regulated.

Although on several counts advantageous and essentially achieving its objective, this approach still has certain disadvantages.

First, it cannot be applied where very low supply voltages, as are required by the most popular portable apparatus. Second, the dynamic range stability of the circuit has proved less than satisfactory.

Nor are speed of response and control of the PNP transistor saturation level entirely satisfactory.

The underlying technical problem of this invention is to provide a high-efficiency DC/DC rectifier-converter circuit, which can be used in mixed applications of the step-up/step-down type and has appropriate structural and functional features to provide improved dynamic range stability and allow supply at very low voltages.

Summary of the Invention

The principle on which this invention stands is that of keeping low the gain of the voltage comparator incorporated in the rectifier, while providing a wide pass-band of the regulating loop triggering signal in the rectifier.

Based on this principle, the technical problem is solved by a circuit as previously indicated and as defined in the characterizing portions of Claim 1 and following.

The features and advantages of the circuit according to the invention are made clearly evident by the following detailed description of embodiments thereof, as illustrated by way of non-limitative examples in the accompanying drawings.

Brief Description of the Drawings

Figure 1 is a basic diagram of a DC/DC converter circuit in a step-up configuration, according to the prior art;

Figure 2 is a basic diagram of a synchronous rectifier circuit as used in a step-up converter, according to the prior art;

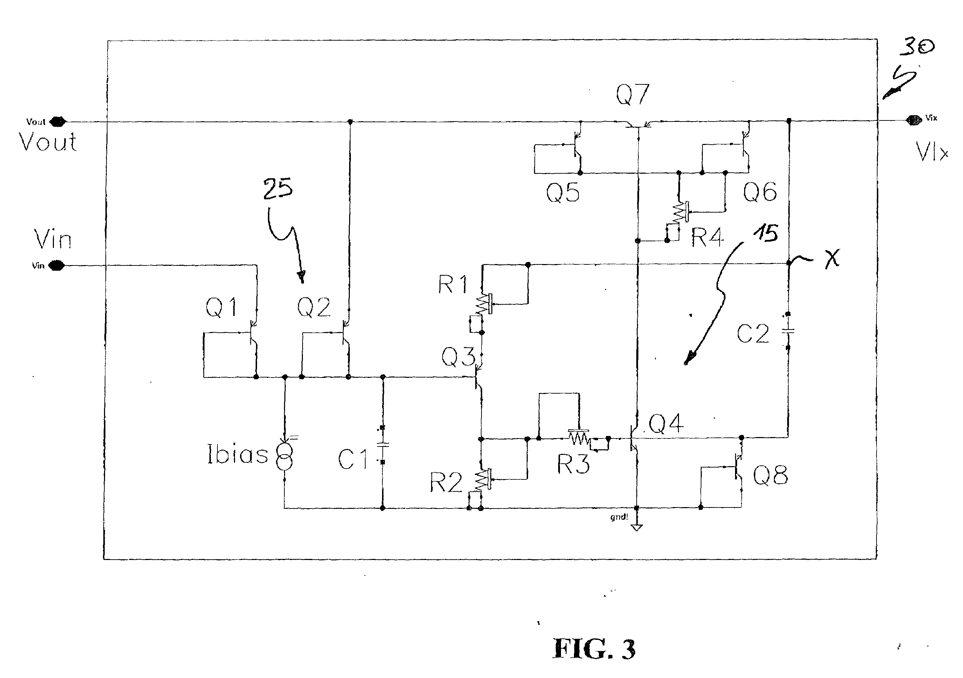

Figure 3 is a basic diagram of a DC/DC rectifier-converter circuit according to this invention; and

Figure 4 is a circuit diagram of an exemplary application that includes the circuit shown in Figure 3.

Detailed Description

With reference to the drawing views, a rectifier-converter circuit, working as a highly efficient DC/DC converter in mixed step-up/step-down applications, is shown generally at 30 in schematic form.

The DC/DC rectifier-converter circuit 30 has an input terminal IN, receiving an input voltage Vin, and has an output terminal OUT generating a regulated DC output voltage.

A third terminal node X can be considered to form a second voltage input presenting a voltage value Vlx picked-up from one end of an inductor L external to the circuit 30.

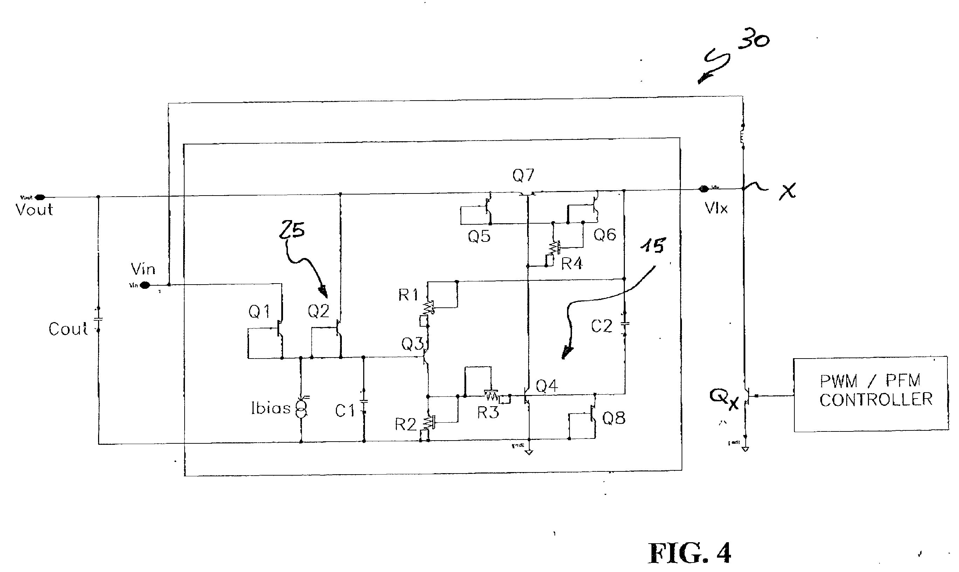

The inductor L is connected between the input terminal IN and the node X, to which one terminal of a power switch Qx is taken, as shown in Figure 4, the switch Qx being an NPN bipolar power transistor whose timing is controlled by a control circuit 10 using PWM and/or PFM signals.

An external capacitor Cout is connected between the output terminal OUT and a ground potential to store energy transferred from the inductor L.

The circuit 30 is basically a feedback loop construction, and comprises the three elements listed here below.

An electronic power switch Q7 connected between the node X and the output node OUT so as to couple the inductor L to the output terminal OUT. In this embodiment, the switch Q7 is a PNP bipolar power transistor. The PNP power transistor Q7 has high $h_{FE}$, high recovery speed, and is purposely fabricated with high-speed bipolar technologies at a high integration density. This transistor Q7 functions as a controlled-saturation switching element, thereby providing low-drop switching for high-efficiency conversion.

A control circuit 15, for the switch Q7, which circuit is adapted to sense the potential difference between the first and second conduction terminals of the switch. This control circuit 15 controls the power transistor Q7 to conduct when the potential Vlx at the first terminal is higher than the potential Vout at the second terminal.

A comparator 25 adapted to enable powering the control circuit 15 only when the voltage Vlx exceeds the voltage Vout, with Vin < Vout. On the other hand, with Vin > Vout, the comparator will only power the control circuit 15 when Vlx > Vin.

The comparator 25 comprises transistors Q1, Q2 and Q3, a capacitor C1, and a resistor R1. Advantageously, the transistors Q1, Q2 and Q3 are common-base bipolar transistors, preferably PNP transistors.

The transistor Q1 has one conduction terminal connected to the input node IN and the other conduction terminal coupled to a reference potential, such as a ground potential GND, through a bias-current generator Ibias.

The transistor Q2 has one conduction terminal connected to the output node OUT, and the other conduction terminal coupled to the ground potential GND through the same bias current generator.

The transistor Q3 has one conduction terminal connected to the node X through a variable resistor R1, and has the other conduction terminal coupled to the ground potential GND through a second variable resistor R2.

The capacitor C1 is connected in parallel with the generator Ibias. The capacitor C1 provides a virtual ground on the base node of transistor Q3 in order to speed up the response of the transistors that turn off the synchronous rectifier on the falling edge of the waveform Vlx.

A common-base layout about transistor Q3 is provided by using the capacitor C1, which is characterized by a high pass-band current gain.

This comparator 25 affords a smaller gain compared to prior designs (US 6,091,232) that employ a comparator in a common-emitter layout. However, the comparator 25 has a wide pass-band that ensures very fast triggering of the regulation loop of the rectifier 30.

Briefly, the comparator 25 allows a high speed of response to be achieved at the expense of a voltage gain that is unnecessary for the rectifier to perform correctly.

The driver circuit 15 supplies the base current to the power transistor Q7, modulating the current value to suit the saturation level attained by the transistor and a current signal from the comparator 25.

The driver circuit 15 comprises a pair of transistors Q5, Q6 in a diode configuration, which transistors are connected, with opposite ends, each to a respective conduction terminal of transistor Q7. A variable resistor R4 is connected between these transistors and the base of transistor Q7.

An NPN transistor Q4 is connected between the base of the power transistor Q7 and the ground potential GND. This transistor Q4 is further connected to the resistor R4, and through the latter to the diode pair Q5, Q6. The transistor Q4 has its base connected to a conduction terminal of transistor Q3 through a variable resistor R3. The conduction terminal of Q3 can be regarded as the output of the comparator 25 for driving the control circuit 15.

A transistor Q8 is connected between the base terminal of transistor Q4 and ground GND. This transistor Q8 is in a diode configuration and effectively limits, to about -0.6V, the voltage attained at the base of transistor Q4 on the falling edge of the voltage waveform Vlx, so as to prevent reverse conduction phenomena, possibly accompanied by the triggering of parasitic and lateral substrate transistors, and to speed up the restoration of transistor Q4 to conduction.

A capacitor C2 is connected between the base of transistor Q4 and the node X. This capacitor C2 functions to stabilize the feedback loop for small signals by introducing a dominant pole. When the rectifier is turned on, the capacitor C2 also becomes effective to inject additional current into the base of transistor Q4 and to speed up the turning on of this transistor and the whole rectifier proportionally to the slope of the waveform of the voltage Vlx during the rising edge of Vlx.

Thus, the comparator 25 only powers the driver circuit 15 when the voltage Vlx is higher than the voltage Vout, while it is Vin < Vout. When, on the contrary, Vout < Vin, the comparator 25 only powers the driver circuit 15 while it is Vlx > Vin. As a result, power can be transferred from the magnetic field of the inductor L to the output, but not the other way around.

In particular, the circuit is to allow the one-way transfer of power to the node OUT, at potential Vout, from the node X, at potential Vlx, only when the node potential Vlx exceeds the higher of the potentials Vin and Vout.

By means of the resistor R4, the diodes Q5 and Q6 force the base potential of the power transistor Q7 to be the higher of:

$$max(Vout-VbeQ5; Vlx-VbeQ6)$$

this being a condition that ensures complete turn-off of Q7 while the rectifier is not operating.

Unlike conventional circuits, the rectifier 30 of this invention limits the minimum voltage Vlx that will turn on the rectifier to the following value:

$$Vlx(min) > VcesatQ4+VbeQ7$$

which value is approximately equal to 0.9V.

In the circuit of this invention, the saturation level of the power transistor Q7 is better controlled, as explained hereinafter.

The operation of the circuit according to the invention will now be described in detail.

The step-up mode will be considered first.

The current Ibias is the bias current of the circuit 30. In a static condition, the following relation must be fulfilled in order for the transistor Q3 to become conductive:

$$Vlx-IeQ3*R1-VbQ3>max(Vout-VbeQ1, Vin-VbeQ2) \tag{1}$$

If Vout > Vin, which corresponds to operation in the step-up mode, relation (1) becomes:

$$VcesatQ7=Vlx-Vout>IeQ3*R1+VbeQ3-VbeQ1 \tag{2}$$

Relation (2) defines the saturation level of the power transistor Q7 relative to the current being flowed through it and the potential difference between Vbe for transistor Q1 and Vbe for transistor Q3.

From the expression for the current IeQ3, as a function of the current IcQ7 through the power transistor Q7, it is:

$$IeQ3\cong\{IcQ7(R2+R3)/(\beta_{F7}\beta_{F4})+VTln[IcQ7/(Ico\ \beta_{F7})]\}/R2 \tag{3}$$

Whence the following relation for VcesatQ7 can be obtained:

$$VcesatQ7=Vlx-Vout=\{IcQ7(R2+R3)/(\beta_{F7}\beta_{F4})+VTln[IcQ7/(Ico$$

$$\beta_{F7})]\}R1/R2+VbeQ3-VbeQ1 \tag{4}$$

If IbQ3 << Ibias, the difference VbeQ3-VbeQ1 can be written as:

$$VbeQ3-VbeQ1=VT[ln(Ico3/Ico1)+ln(IcQ3/Ibias)]$$

$$=VTln[N]+VTln[IcQ3/Ibias]$$

where N=AreaQ3/AreaQ1, i.e. N is the ratio of the emitter areas of transistors Q3 and Q1.

Substituting the last relation in (4):

$$VcesatQ7=\{IcQ7(R2+R3)/(\beta_{F7}\beta_{F4})]+VTln[IcQ7/(Ico$$

$$\beta_{F7})]\}R1/R2+VTln\{[N]+ln[IcQ3/Ibias]\} \tag{5}$$

where IcQ3 is also a function of IcQ7, according to relation (3) above.

In those cases where the switch current IcQ3 is very small and the $\beta_F$ parameters of transistors Q3 and Q4 are sufficiently high, some logarithmic and linear terms that are functions of IcQ7 in relation (5) can be neglected, so that the following relation is arrived at in close approximation:

$$VcesatQ7=Vlx-Vout=VTln[Ico3/Ico1]=VTln[N] =KT/q\ ln[N] \tag{5'}$$

More particularly, relation (5) can be re-written to bring out the terms thereof:

$$VcesatQ7=\{IcQ7(R2+R3) /(\beta_{F7}\beta_{F4})]\}R1/R2+\text{linear term in IcQ7}$$

$$+\{VTln[IcQ7/(Ico\ \beta_{F7})]\}R1/R2+ \qquad \text{log term in } IcQ7/\beta_{F7}$$

$$+VTln\{[N]+ \text{dependent term on geometric parameters}$$

$$+ln[IcQ3/Ibias].$$

The last term can definitely be neglected for moderate values of the switching current.

The first linear term dominates the log term, the latter being a function of $IcQ7/\beta_{F7}$, so that the control law becomes the simple sum of a constant term, being a function of temperature and a linear term, plus a function of the ratio of two resistors, R1/R2:

$$VcesatQ7 = VTln\{[N]+\{IcQ7(R2+R3)/(\beta_{F7}\beta_{F4})]\}R1/R2.$$

The control law of the power switch Q7 is the simple one of a switch that is characterized by the serial connection of an ideal voltage generator, having the value VTln{[N], and a moderately non-linear resistor, on account of the dependence of Ic on $\beta_{F7}$, whose value is $[(R2+R3)/(\beta_{F7}\beta_{F4})]R1/R2$ (step-up mode).

Briefly, the value of minimum saturation voltage of the power transistor Q7 is a function of geometrical parameters only, specifically of the emitter areas of Q1 and Q3, and can be determined with great accuracy to provide optimum control of the attainable saturation level.

In this way, large base currents are prevented from setting in the power transistor Q7, as are any such saturation levels as may be incompatible with the high switching speeds specified. In particular, long times to nullify the charge stored in the base region of the power transistor are avoided.

This feature makes the circuit of this invention particularly fast and suitable for applications where high switching speeds are required, as is typical of synchronous rectifiers for DC/DC converters.

It should be further noted that:

$$IbQ3 = IeQ3/(\beta_{F3}+1) \tag{6}$$

so that (3) can be re-written as:

$$IeQ3 \cong IbQ3/(\beta_{F3}+1)=\{IcQ7(R2+R3)/(\beta_{F7}\beta_{F4})]+VTln[IcQ7/(Ico\ \beta_{F7})]\}/R2 \qquad (7)$$

Therefore:

$$IbQ3=\{IcQ7(R2+R3)/(\beta_{F7}\beta_{F4})+VTln[IcQ7/(Ico\ \beta_{F7})]\}/[R2(\beta_{F3}+1) \qquad (8)$$

Since the value of current IbQ3 has a top limit in the value IbQ3«Ibias, relation (8) defines the current control law that is applied by the rectifier of this invention, and places a limit on the largest current that can be passed through the power transistor Q7 in the saturation range.

It should be further noted that the rectifier of this invention allows highfrequency ringing, a source of EMI that is typical of damping transistors in circuits having a high merit factor Q, such as single-ended step-up converter circuits, to be suppressed naturally.

The step-down mode of operation will now be discussed.

Accordingly, a situation of Vout<Vin, which corresponds to the step-down mode, is considered.

In order that transistor Q3 be conducting, relation (1) must always be satisfied. Therefore, the following relation applies:

$$VemitterQ7=Vlx=Vin+IeQ3*R1+VbeQ3-VbeQ2 \qquad (10)$$

whence, the following expression is arrived at due to drop-out of transistor Q7:

$$VceQ7=Vlx-Vout=Vin-Vout+IeQ3*R1+VbeQ3-VbeQ2 \qquad (11)$$

Assuming now Vin-Vout to be >0.5V, and transistor Q7 to be in the linear range, with $\beta_F$ high so that IeQ3 is low, then term IeQ3*R1 and the effect of the difference VbeQ3-VbeQ2 with respect to term Vin-Vout can be neglected.

Therefore, relation (11) simply becomes:

$$VceQ7=Vlx-Vout=Vin-Vout \qquad (12)$$

This expression demonstrates that the synchronous rectifier of this invention does function as a linear switch with minimum drop-out. Under these conditions, the current flowed through the rectifier is only limited by the curve of maximum thermal dissipation, in view also of the high loop gain of the circuit.

The inventive circuit can be operated in either the step-up or the step-down mode without discontinuance.

Therefore, the circuit design proposed hereinabove distinguishes itself from conventional synchronous rectifier designs, overcoming their limitations and affording the following advantages:

it provides for automatic step-up/down operation in a continuous manner;

controls the extent of the power switch saturation automatically;

in the shut-down state, can completely decouple the load from the supply, thereby de-activating the transfer of power; and

minimizes static power usage in the stand-by state.

**Claims**

1. A synchronous rectifier circuit (30) working as a high-efficiency DC/DC converter for mixed step-up/step-down applications, the circuit having a regulating loop structure and comprising:

    an input terminal (IN) receiving a voltage signal (Vin), a second input terminal node (X) connected to an external inductor (L), and an output terminal (OUT);

a power switch (Q7) connected between said terminal node (X) and said output terminal (OUT) to convert on its output a voltage (Vlx) presented at one end of said inductor (L);

a driver circuit (15) for driving the power switch (Q7), and a comparator (25) sensing the potential difference between the output and input terminals (OUT,IN) and to produce an enable signal for the driver circuit (15);

**characterised in that**:

said comparator (25) is a wide pass-band comparator forcing prompt triggering of the regulation loop in the rectifier.

2. A circuit according to Claim 1, **characterised in that** the driver circuit (5) comprises a pair of transistors (Q5,Q6) in a diode configuration, said transistors being connected each to a corresponding conduction terminal of the power switch (Q7) to sense the potential difference between the conduction terminals of the switch (Q7).

3. A circuit according to Claim 1, **characterised in that** the comparator (25) enables the driver circuit (15) when the potential (Vlx) at the second input node (X) is higher than the potential (Vout) at the output terminal (OUT), as in the step-up mode the input voltage (Vin) is lower than the output voltage (Vout), or when the potential (Vlx) at the second input node (X) is lower than the potential (Vin) at the input terminal (IN), as in the step-down mode the input voltage (Vin) is higher than the output voltage (Vout).

4. A circuit according to Claim 1, **characterised in that** the power switch (Q7) is a bipolar power transistor of the PNP type.

5. A circuit according to Claim 1, **characterised in that** the comparator (25) comprises common-base bipolar transistors.

6. A circuit according to Claim 2, **characterised in that** the driver circuit (15) further comprises a transistor (Q4) connected between the control terminal of the power switch (Q7) and a reference potential (GND), and receives on the base terminal an output signal from the comparator (25).

7. A circuit according to Claim 6, **characterised in that** an additional transistor (Q8) is connected, in a diode configuration, between the base terminal of said transistor (Q4) and said reference potential (GND), said additional transistor being adapted to limit the voltage attained at the base of the driver transistor (Q4) of the power switch on the falling edge of the waveform on the second input node (X), thereby to avoid reverse conduction phenomena.

8. A circuit according to Claim 6, **characterised in that** a capacitor (C2) is connected between said base terminal and the second input node (X) to stabilize the feedback loop and to inject additional current in said base as the rectifier is turned on, thereby to speed up turning on the driver transistor (Q4) of the power switch (Q7).

Fig. 1
(Prior Art)

Fig. 2
(Prior Art)

FIG. 3

EP 1 324 479 A1

FIG. 4

## PARTIAL EUROPEAN SEARCH REPORT

**European Patent Office**

which under Rule 45 of the European Patent Convention shall be considered, for the purposes of subsequent proceedings, as the European search report

**Application Number**

EP 01 83 0830

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | US 6 091 232 A (CRISCIONE MARCELLO ET AL) 18 July 2000 (2000-07-18) * the whole document * | 1-9 | H02M3/158 |
| A | US 5 994 882 A (MA BING FONG) 30 November 1999 (1999-11-30) * abstract; figures 2-10 * * column 4, line 9 - column 4, line 61 * | 1-9 | |
| A | US 6 037 755 A (THOTTUVELIL VIJAYAN J ET AL) 14 March 2000 (2000-03-14) * column 6, line 6 - column 6, line 47; figure 4 * | 1-9 | |

**TECHNICAL FIELDS SEARCHED (Int.Cl.7)**

H02M
G05F

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| MUNICH | 13 June 2002 | Braccini, R |

EPO FORM 1503 03.82 (P04C07)

European Patent
Office

**INCOMPLETE SEARCH
SHEET C**

Application Number

EP 01 83 0830

Claim(s) searched incompletely:
    1-4

Reason for the limitation of the search:

Present claims 1-9 relate to an apparatus defined by reference to a
desirable characteristic or property, namely "the comparator is a wide
pass-band comparator forcing prompt triggering of the regulation loop in
the rectifier".
The claims cover all apparatuses having this characteristic or property,
whereas the application provides support within the meaning of Article 84
EPC and/or disclosure within the meaning of Article 83 EPC for only one
of such apparatus. In the present case, the claims so lack support, and
the application so lacks disclosure, that a meaningful search over the
whole of the claimed scope is impossible. Independent of the above
reasoning, the claims also lack clarity (Article 84 EPC). An attempt is
made to define the apparatus by reference to a result to be achieved.
Again, this lack of clarity in the present case is such as to render a
meaningful search over the whole of the claimed scope impossible.
Consequently, the search has been carried out for those parts of the
claims which appear to be clear, supported and disclosed, namely those
parts relating to the apparatus as claimed and including the features
described on page 7 of the specification.

**ANNEX TO THE EUROPEAN SEARCH REPORT
ON EUROPEAN PATENT APPLICATION NO.**

EP 01 83 0830

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2002

| Patent document cited in search report | | Publication date | Patent family member(s) | | Publication date |
|---|---|---|---|---|---|
| US 6091232 | A | 18-07-2000 | EP | 0933865 A1 | 04-08-1999 |
| | | | JP | 11252902 A | 17-09-1999 |
| US 5994882 | A | 30-11-1999 | NONE | | |
| US 6037755 | A | 14-03-2000 | NONE | | |

EPO FORM P0459

For more details about this annex : see Official Journal of the European Patent Office, No. 12/82